# EUROPEAN PATENT APPLICATION

(11) **EP 3 106 981 A1**
(43) Date of publication of application: **21.12.2016**
(21) Application number: 14889709.3
(22) Date of filing: 20.08.2014
(51) Int. Cl.: G06F 9/445

(54) **MOBILE TERMINAL AND METHOD OF PROCESSING LOADABLE CONTENT**

(30) Priority: 17.04.2014 CN 201410156147
(71) Applicant: ZTE Corporation, Shenzhen, Guangdong 518057 (CN)
(72) Inventor: REN, Jiaxi, Shenzhen Guangdong 518057 (CN)
(74) Representative: Schröer, Gernot H.
(86) International application number: PCT/CN2014/084784
(87) International publication number: WO 2015/158086

(57) **Abstract**

A mobile terminal and a method of processing loadable contents, the method includes: presetting a mapping relationship between matching conditions and loadable contents; and loading a corresponding loadable content according to the mapping relationship when the matching condition is satisfied. The technical solution realizes corresponding loading of interface loadable content and application loadable content according to the set matching condition such as network switching, and/or terminal hardware condition change, and/or user information change and/or the like, thus simplifying the setting of the loadable content and improving the working performance of the mobile terminal.

## Description

### Technical Field

The present invention relates to the field of mobile application, in particular to a mobile terminal and a method for processing loadable contents.

### Background of the Related Art

With the continuous development of mobile communication technologies, the performance and setting of a mobile terminal are enriched and improved. Especially in the application field of smart phones, tablet computers, etc., due to higher hardware configuration and larger storage spaces, individualized interface and application loading are continuously increased. During actual application, mobile terminals do not distinguish people who use applications. When a terminal is transferred from a current user to another user who easily contacts and uses the mobile terminal, for different ages, genders, etc., adopting the existing individualized interface and application loading will influence the effective usage of the mobile terminal for the user. When a loadable content is modified, a page loadable content such as font, color and volume needs to be set one by one in general settings of the terminal. For the loading of an application, processes are closed mainly through program management software and the like at present. If a user of the mobile terminal, e.g., public device such mobile phone or mobile tablet is changed within a short time, interface setting and loading setting need to be performed, which is very troublesome. For example, when a mobile phone is used by a young person, an individualized interface, ringtone, a great amount of instant messaging applications, etc. are usually loaded; and when the mobile phone is used by an old person, the interface which needs to be loaded generally requires a larger font, a greater prompt volume is set, games in loaded applications are fewer, and usually a few of instant messaging applications are selectively loaded. According to the relevant setting method of the mobile terminal, loaded interface modification of font, volume and the like needs to be made in general setting, process management also needs to be performed aiming at the loaded application, it is usually impossible to modify a loadable content such as interface loading and application loading when the mobile terminal is used among different users, and the use of the mobile terminal is greatly influenced. In addition, a great amount of application loading possibly loads a great amount of processes, the operating speed of the mobile phone is influenced, and it is relatively difficult to select a proper loadable content during normal usage. The similar problem also exists in a mobile terminal such as a tablet computer. Loading of a great amount of applications of the mobile terminals under different network and hardware conditions will cause problems, such as the unlocking is troublesome and the performance of the mobile terminals is influenced.

To sum up, the loadable content of the existing mobile terminal is relatively simple, and when the same device is used by different users under different network and hardware conditions, there are usually the problems, setting a loadable content is troublesome, the loadable content is not reasonable, and thus the performance of the mobile terminal is influenced.

### Summary of the Invention

In order to solve the above-mentioned technical problem, the embodiments of the present invention provide a mobile terminal and a method of processing loadable contents, which can perform the loading of contents according to different matching conditions, simplify the settings of loadable contents and improve the working performances of mobile terminals.

In order to achieve the purpose of the present invention, the embodiment of the present invention provides a method of processing loadable contents of a mobile terminal, comprising:
presetting a mapping relationship between matching conditions and loadable contents; and
loading a corresponding loadable content according to the mapping relationship when a matching condition is satisfied.

Alternatively, the matching condition comprises a condition for initiating loadable content change, comprising network switching, and/or terminal hardware condition change, and/or user information change.

Alternatively, the loadable content comprises interface loadable content and application loadable content, wherein,
the interface loadable content comprises settings of font, and/or color, and/or volume, and/or display brightness, and/or theme, and/or desktop layout of a mobile terminal interface; and
the applicable loadable content comprises a loadable application determined according to network switching, or a loadable application determined according to terminal hardware condition change, or a loadable application determined according to user information change.

Alternatively, the method further comprises: after presetting the mapping relationship between the matching conditions and the loadable contents, when the matching condition is satisfied, before loading the corresponding loadable content according to the mapping relationship, receiving an external instruction to determine whether to perform the loading of the loadable content according to the mapping relationship;
when determining to perform the loading of the loadable content according to the mapping relationship, performing the loading of the loadable content according to the mapping relationship; and
when determining to not perform the loading of the loadable content according to the mapping relationship, performing loading according to a loadable content preset and defaulted by a system or stored by a client.

In another aspect, the embodiment of the present invention further provides a mobile terminal, comprising a mapping unit and a loading unit, wherein,
the mapping unit is configured to preset a mapping relationship between matching conditions and loadable contents; and
the loading unit is configured to load a corresponding loadable content according to the mapping relationship when a matching condition is satisfied.

Alternatively, the mapping unit comprises a matching condition module and a loading content module, wherein,
the matching condition module is configured to set the matching condition, wherein the matching condition comprises a condition for initiating loadable content change, comprising network switching, and/or terminal hardware condition change, and/or user information change; and
the loading content module is configured to set the loadable contents.

Alternatively,
the loading content module is configured to set interface loadable content and application loadable content, wherein,
the interface loadable content comprises settings of font, and/or color, and/or volume, and/or display brightness, and/or theme, and/or desktop layout of a mobile terminal interface; and
the applicable loadable content comprises a loadable application determined according to network switching, or a loadable application determined according to terminal hardware condition change, or a loadable application determined according to user information change.

Alternatively, the mobile terminal further comprises: a loading setting unit configured to receive an external instruction to determine whether to perform the loading of the loadable content according to the mapping relationship;
when determining to perform the loading of the loadable content according to the mapping relationship, perform the loading of the loadable content according to the mapping relationship; and
when determining to not perform the loading of the loadable content according to the mapping relationship, perform loading according to a loadable content preset and defaulted by a system or stored by a client.

In order to solve the technical problem, the embodiment of the present invention further provides a computer program, comprising program instructions, wherein when the program instructions are executed by a user device, the user device is enabled to implement the above mentioned method.

In order to solve the technical problem, the embodiment of the present invention further provides a carrier carrying the computer program.

In the technical solution, by presetting the mapping relationship between the matching conditions and the loadable contents; and loading a corresponding loadable content according to the mapping relationship when the matching condition is satisfied, the corresponding loading of interface loadable content and applicable loadable content is realized according to the set matching condition such as network switching, and/or terminal hardware condition change and/or user information change and/or the like, the setting of the loadable content is simplified and the working performance of the mobile terminal is improved.

### Brief Description of Drawings

FIG. 1 is a flowchart of realizing a method for processing loadable contents of a mobile terminal according to the embodiment of the present invention;
FIG. 2 is a structural diagram of a mobile terminal according to the embodiment of the present invention.

### Preferred Embodiments of the Invention

The embodiments of the present invention will be described below in detail in combination with the drawings. It needs to be stated that the embodiments in the present application and the features in the embodiments can be freely and mutually combined under the situation of no conflict.

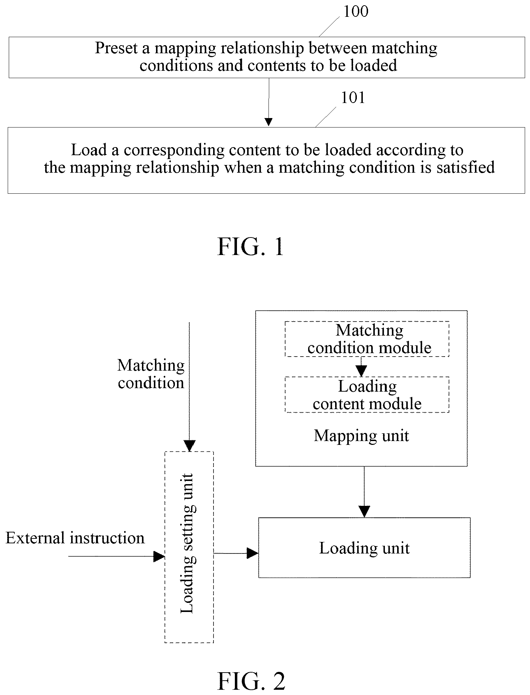

FIG. 1 is a flowchart of realizing a method for processing loadable contents of a mobile terminal according to the embodiment of the present invention. The method comprises:

In step 100, a mobile terminal presets a mapping relationship between matching conditions and loadable contents.

In this step, alternatively,
the matching condition comprises a condition for initiating loadable content change, comprising network switching, and/or terminal hardware condition change and/or user information change.

The loadable content comprises interface loadable content and application loadable content, wherein,
the interface loadable content comprises settings of font, and/or color, and/or volume, and/or display brightness, and/or theme and/or desktop layout of a mobile terminal interface; and
the applicable loadable content comprises a loadable application determined according to network switching, or a loadable application determined according to terminal hardware condition change, or a loadable application determined according to user information change.

Alternatively,
the loadable content may be set by a user and may also be generated according to analysis and statistics. The applicable loadable content determined according to network switching is mainly the loadable application determined according to requirements of some applications on traffic speed during use. For example, when a network is switched from a high-speed network to a low-speed network, if an application such as online video or real-time video session or the like is loaded, the application will not work normally and thus the application may be selectively not loaded. Of course, when a condition is satisfied, the application may be selectively reloaded.

A terminal hardware condition comprises internal memory and CPU. Since new mobile phones (smart phones) have a modular design solution, an application recorded content of modular design has certain requirements on a terminal hardware condition. If the configuration of the terminal hardware condition is low, loading of some applications will influence the normal work of the mobile terminal. Therefore, in this embodiment, a mapping relationship between terminal hardware conditions and application loadable contents is set for the change of the terminal hardware condition. Here, the application loadable content may also be the combination of the loadable application determined according to network switching, the terminal hardware condition change and the user information change.

In step 101, the mobile terminal loads a corresponding loadable content according to the mapping relationship when a matching condition is satisfied.

Alternatively, before step 101, the method further comprises: the mobile terminal receives an external instruction to determine whether to perform the loading of the loadable content according to the mapping relationship;
when determining to perform the loading of the loadable content according to the mapping relationship, the mobile terminal performs the loading of the loadable content according to the mapping relationship; and
when determining to not perform the loading of the loadable content according to the mapping relationship, the mobile terminal performs loading according to a loadable content preset and defaulted by a system or stored by a client.

FIG. 2 is a structural diagram of a mobile terminal according to the embodiment of the present invention. The mobile terminal comprises a mapping unit and a loading unit, wherein,
the mapping unit is configured to preset a mapping relationship between matching conditions and loadable contents; and
the loading unit is configured to load a corresponding loadable content according to the mapping relationship when the matching condition is satisfied.

Alternatively, the mapping unit comprises a matching condition module and a loading content module, wherein,
the matching condition module is configured to set the matching condition, wherein the matching condition comprises a condition for initiating loadable content change, comprising network switching, and/or terminal hardware condition change, and/or user information change; and
the loading content module is configured to set interface loadable content and application loadable content, wherein,
the interface loadable content comprise settings of font, and/or color, and/or volume, and/or display brightness, and/or theme, and/or desktop layout of a mobile terminal interface; and
the applicable loadable content comprises a loadable application determined according to network switching, or a loadable application determined according to terminal hardware condition change, or a loadable application determined according to user information change.

Alternatively, the mobile terminal provided by the embodiment of the present invention further comprises: a loading setting unit configured to receive an external instruction to determine whether to perform the loading of the loadable content according to the mapping relationship; when determining to perform the loading of the loadable content according to the mapping relationship, perform the loading of the loadable content according to the mapping relationship; and when determining to not perform the loading of the loadable content according to the mapping relationship, perform loading according to a loadable content preset and defaulted by a system or stored by a client.

The embodiments of the present invention will be clearly described below in detail in combination with a specific application example.

In this application example, user information is changed when a mobile phone is powered on for the first time or the mobile phone is powered on again when a card is changed.

Firstly, a mapping relationship between matching conditions and loadable contents is preset.

In this step, the matching condition is that the mobile phone is powered on for the first time or the mobile phone is powered on again when a card is changed. Generally, an input interface is set, and a factor such as user age change, gender change and so on which influences the loadable content of the mobile phone is used as a matching condition to determine a loadable content.

The loadable content comprise interface loadable content and application loadable content, wherein,
the interface loadable content comprise settings of font, and/or color, and/or volume, and/or display brightness, and/or theme, and/or desktop layout of a mobile terminal interface; and
the applicable loadable content comprises a loadable application determined according to network switching, or a loadable application determined according to terminal hardware condition change, or a loadable application determined according to user information change. Here, generally some application processes which the user are not interested in are automatically closed at background according to user information such as the age, gender and occupation of the user and so on to guarantee the performance of the mobile phone.

It needs to be stated that the loadable content may be set by the user and may also be generated according to analysis and statistics.

For example, according to the matching condition of the loadable content which is generated according to analysis and statistics, data acquisition is performed by means of application setting, interface setting and so on for different ages. Supposing that data are stored in a database, the database may be designed to comprise three tables as follows: a loadable interface theme table, wherein fields comprise theme ID, user gender, user age, user interest and hobby and user favorite color, the user age may be divided into a plurality of ages (such as children, teenagers, youngsters and elders); a loadable content application set table, wherein fields comprise preloaded application ID, user gender, user age, user interest and hobby and user favorite color; and a corresponding table of matching conditions and loadable contents, wherein fields comprise user information (for example, a matching condition is change of user information), user account, corresponding theme ID and corresponding preloaded application ID. First two tables may be generated through analysis and statistics, and may also be generated according to settings of mobile phone applications during use of the mobile phone. Of course, when a loadable content is loaded through the third table, a loadable item obtained by statistical analysis may also be selected to modify a loading list, and a new corresponding relationship between matching conditions and loadable contents is saved. Here, through the loadable interface theme table, the contents such as font, volume and color of the interface and so on are selectively loaded. Through the loadable content application set table, applications suitable for ages are selectively loaded. For example, youngsters love watching sports news, elders love listening to radio, etc., corresponding loading is performed according to the preloaded application ID. When there is much matching information of preloaded application IDs in the corresponding table of matching conditions and loadable contents, the preloaded application which is the most suitable for the user may be selectively loaded according to the matching condition.

Specifically, supposing that personal information input of a user is: male, 12-year old, loving sports and fashion, but poor in self-discipline of learning. According to results obtained through analysis and statistics, a set of theme settings in an age group of teenagers may be found in the loadable interface theme table, this theme comprises bright hue of theme overall, some wallpaper related to sports or fashion magazines may be selected as a theme background, and characters may be set to be Mars scripts to adapt to character features of teenagers. By using the loadable content application set table, suitable applications may be selected for him according to his age; and since he is at a learning stage, more learning applications may be loaded for him and some game, audio and video applications are removed. In addition, some applications which can protect and supervise teenagers, e.g., applications which can lock the mobile phone at a specific period, may be loaded.

Secondly, a corresponding loadable content is loaded according to the mapping relationship when a matching condition is satisfied.

Alternatively, before the corresponding loadable content is loaded according to the mapping relationship, an external instruction is further received to determine whether the loading of the loadable content is performed according to the mapping relationship;
when determining to perform the loading of the loadable content according to the mapping relationship, the loading of the loadable content is performed according to the mapping relationship; and
when determining to perform the loading of the loadable content according to the mapping relationship, loading is performed according to a loadable content preset and defaulted by a system or stored by a client.

Specifically, an option for opening or closing the usage of processing the loadable content is provided in a mobile phone setting page to allow the user to open or close a function of automatically adjusting the loadable content of the mobile phone according to network switching, and/or terminal hardware condition change and/or user information change, and such setting is similar to conventional setting (such as whether to perform automatic brightness adjustment and whether to automatically switch to a power saving mode). In this option, if the user selects to open the function of processing the loadable content, an interface for the user to input the matching condition is simultaneously provided; and if the user has already input when powering on the mobile phone, the input content is displayed and the user may select or modify the content by himself/herself.

Of course, when one mobile phone is used by a plurality of users and corresponding loadable contents are selected according to personal setting or by selecting network statistics to perform matching, the set information may be saved. When a switching condition is satisfied and the user information is changed, the corresponding matching condition is selected to perform processing of the loadable content.

Although the embodiments disclosed by the present application are described above, the contents are embodiments which are adopted just for facilitating the understanding about the present application instead of limiting the present application. One skilled in the art of the present application may make any modification or variation in the form of implementation and details without departing from the rule and range disclosed by the present application. However, the patent protection range of the present application should be still subjected to the range defined by the attached claims.

One skilled in the art should understand that all components of the device and/or system provided by the embodiments of the present invention and all steps in the method may be implemented by using general-purpose computing devices, they may be integrated in a single computing device or distributed on a network consisting of a plurality of computing devices. Alternatively they may be implemented by using program codes executable for computing devices, and thus they may be stored in memory devices and executed by computing devices, or they may be respectively manufactured into integrated circuit modules or a plurality of modules or steps thereof may be manufactured into a single integrated circuit module to implement. Therefore, the present invention is not limited to any specific combination of hardware and software.

### Industrial Applicability

In the technical solution, by presetting the mapping relationship between the matching conditions and the loadable contents; and loading the corresponding loadable content according to the mapping relationship when the matching condition is satisfied, the corresponding loading of interface loadable content and applicable loadable content is realized according to the set matching condition such as network switching, and/or terminal hardware condition change and/or user information change and/or the like, the setting of the loadable content is simplified and the working performance of the mobile terminal is improved.

## Claims

1. A method of processing loadable contents of a mobile terminal, comprising:
presetting a mapping relationship between matching conditions and loadable contents; and
loading a corresponding loadable content according to the mapping relationship when a matching condition is satisfied.

2. The method according to claim 1, wherein,
the matching condition comprises a condition for initiating loadable content change, comprising network switching, and/or terminal hardware condition change, and/or user information change.

3. The method according to claim 2, wherein,
the loadable content comprise interface loadable content and application loadable content, wherein,
the interface loadable content comprises settings of font, and/or color, and/or volume, and/or display brightness, and/or theme, and/or desktop layout of a mobile terminal interface; and
the applicable loadable content comprises a loadable application determined according to network switching, or a loadable application determined according to terminal hardware condition change, or a loadable application determined according to user information change.

4. The method according to claim 1, further comprising:
after presetting the mapping relationship between the matching conditions and the loadable contents, and when the matching condition is satisfied, before the corresponding loadable content is loaded according to the mapping relationship, receiving an external instruction to determine whether to perform the loading of the loadable content according to the mapping relationship;
when determining to perform the loading of the loadable content according to the mapping relationship, performing the loading of the loadable content according to the mapping relationship; and
when determining to not perform the loading of the loadable content according to the mapping relationship, performing loading according to a loadable content preset and defaulted by a system or stored by a client.

5. A mobile terminal, comprising a mapping unit and a loading unit, wherein,
the mapping unit is configured to preset a mapping relationship between matching conditions and loadable contents; and
the loading unit is configured to load a corresponding loadable content according to the mapping relationship of the mapping unit when a matching condition is satisfied.

6. The mobile terminal according to claim 5, wherein the mapping unit comprises a matching condition module and a loading content module, wherein,
the matching condition module is configured to set the matching condition, wherein the matching condition comprises a condition for initiating loadable content change, comprising network switching, and/or terminal hardware condition change, and/or user information change;
and
the loading content module is configured to set the loadable content.

7. The mobile terminal according to claim 6, wherein,
the loading content module is configured to set interface loadable content and application loadable content, wherein,
the interface loadable content comprises settings of font, and/or color, and/or volume, and/or display brightness, and/or theme, and/or desktop layout of a mobile terminal interface; and
the applicable loadable content comprises a loadable application determined according to network switching, or a loadable application determined according to terminal hardware condition change, or a loadable application determined according to user information change.

8. The mobile terminal according to claim 5, further comprising:
a loading setting unit configured to receive an external instruction to determine whether to perform the loading of the loadable content according to the mapping relationship; when determining to perform the loading of the loadable content according to the mapping relationship, perform the loading of the loadable content according to the mapping relationship; and when determining to not perform the loading of the loadable content according to the mapping relationship, perform loading according to a loadable content preset and defaulted by a system or stored by a client.

9. A computer program, comprising program instructions, which, when executed by a user device, enable the user device to implement the method according to any one of claims 1-4.

10. A carrier carrying the computer program according to claim 9.
